# FASCICULE DE BREVET EUROPEEN

(11) **EP 1 546 588 B1**
(45) Date de publication et mention de la délivrance du brevet: **20.12.2006**
(21) Numéro de dépôt: 03780278.2
(22) Date de dépôt: 25.09.2003
(51) Int. Cl.: F16K 11/07

(54) **VANNE DE REGULATION DE DEBIT**
DURCHFLUSSREGELVENTIL
DUAL-INLET SELECTIVE FLOW REGULATING VALVE

(30) Priorité: 03.10.2002 FR 0212239
(43) Date de publication de la demande: 29.06.2005
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: ARNAULT, Jean, F-38330 Saint Nazaire Les Eymes (FR); GAGET, Didier, F-38360 Sassenage (FR)
(74) Mandataire: Le Moenner, Gabriel
(86) Numéro de dépôt international: PCT/FR2003/050066
(87) Numéro de publication internationale: WO 2004/031631

(56) Documents cités:
- WO-A-02/11814
- DE-A- 19 740 392
- GB-A- 1 022 574
- PATENT ABSTRACTS OF JAPAN vol. 015, no. 081 (M-1086), 25 février 1991 (1991-02-25) & JP 02 300573 A (FUJI PHOTO FILM CO LTD), 12 décembre 1990 (1990-12-12)
- PATENT ABSTRACTS OF JAPAN vol. 008, no. 040 (M-278), 21 février 1984 (1984-02-21) & JP 58 196373 A (NISSAN JIDOSHA KK), 15 novembre 1983 (1983-11-15)

## Description

La présente invention concerne un système embarqué de fourniture de gaz respiratoire à un passager comportant une valve de distribution et de régulation de fluide.

Les pilotes d'engins modernes, notamment d'avions d'armes, sont alimentés en gaz respiratoire par des systèmes qui fournissent de l'oxygène pur ou un mélange enrichi en oxygène.

Une valve de régulation à une entrée et à deux sorties de type proportionnel pour système embarqué de fourniture de gaz respiratoire est décrite dans le Document EP-A-0 499 505 (Zapata et al.).

Dans la pratique actuelle, une source d'oxygène de secours est systématiquement prévue pour pallier les pannes éventuelles de la source principale d'oxygène, et un organe sélecteur, activé automatiquement ou manuellement, permet à l'utilisateur de commuter l'entrée de la valve de régulation sur la source principale ou, à défaut, sur la source de secours.

Les documents DE 19740392 A1 et JP 02300573 décrivent des valves de distribution et de régulation de medias liquides comprenant quatre zones internes connectables chacune à un circuit liquide extérieur propre et une structure rotative déplaçable dans au moins quatre positions pour établir sélectivement une communication de liquide entre deux de ces zones et isoler chacune des deux autres zones, une première desdites zones étant susceptible d'être sélectivement mise en communication avec chacune des trois autres zones.

La présente invention a pour objet de proposer un système de fourniture de gaz respiratoire à un passager comprenant un circuit utilisateur (U) alimentant un masque (M), ledit circuit ayant une architecture nouvelle de valve de distribution et de régulation de fluide regroupant les fonctions de sélection entre deux sources de fluide et la fonction de régulation classique, utilisant une structure mobile unique, dans un agencement grandement simplifié, compact et à fiabilité accrue.

Pour ce faire, selon une caractéristique de l'invention, la valve de distribution et de régulation de fluide du système comprend un corps de valve définissant quatre zones intérieures, chacune connectable à un circuit de fluides extérieur, et une structure mobile déplaçable dans au moins quatre positions pour établir sélectivement une communication de fluide entre deux de ces zones et isoler chacune des deux autres zones, une première de ces zones étant connectable à un circuit de fluide utilisateur et susceptible d'être sélectivement mise en communication avec chacune des trois autres zones selon le déplacement de la structure mobile

Selon d'autres caractéristiques de l'invention, la valve comprend :
- une deuxième et une troisième zones connectables respectivement à des première et deuxième sources de fluide sous pression pour alimenter séquentiellement le circuit de fluide utilisateur,
- la structure mobile, typiquement constituée d'un tiroir coulissant ou d'un rotor tournant dans des cloisons délimitant les différentes zones, est reliée à un servomoteur de positionnement,

Selon une autre particularité les sources de fluide sous pression sont typiquement des sources d'oxygène principale et de secours.

D'autres caractéristiques et avantages de la présente invention ressortiront de la description suivante d'un mode de réalisation, donné à titre illustratif mais nullement limitatif, faite en relation avec les dessins annexés, sur lesquels :
- la figure 1 est une vue schématique d'un système embarqué de fourniture de gaz respiratoire à un passager selon l'invention dans une première configuration ; et
- les figures 2 et 3 sont des vues schématiques montrant d'autres configurations de la valve de distribution et de régulation de la figure 1.

Dans le mode de réalisation représenté schématiquement sur les figures, une valve de distribution et de régulation de fluide selon l'invention comprend un corps de valve 1, de configuration générale avantageusement cylindrique, dans lequel sont ménagées une multiplicité de zones séparées les unes des autres par des cloisons munies d'orifices traversants sélectivement obturable ou non par un tiroir de valve désigné généralement par la référence 2.

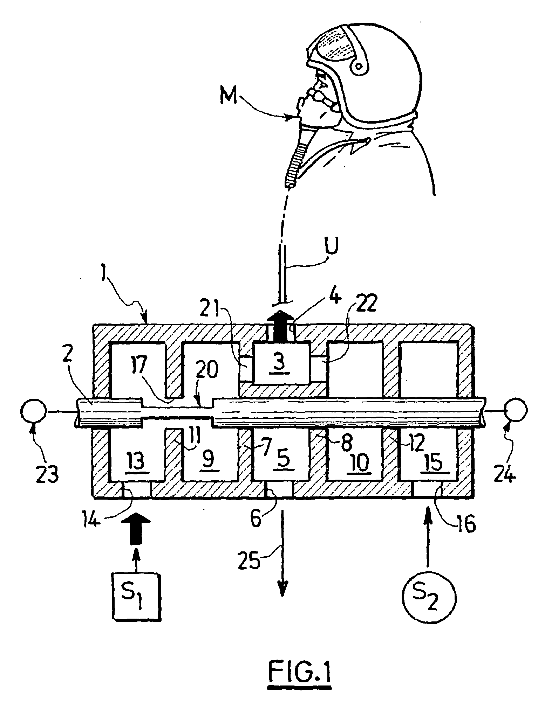

Plus spécifiquement, comme représenté sur la figure 1, le corps de valve 1, de configuration générale sensiblement symétrique par rapport à un plan médian orthogonal à l'axe du tiroir 2, comprend, dans le plan médian et de part et d'autre du tiroir 2, une première zone 3 munie d'un passage d'entrée/sortie de fluide 4 formé dans lé corps de valve 1 et une quatrième zone 5 munie d'un passage d'entrée/sortie de fluide 6 formé dans le corps de valve 1.

Les zones 3 et 5 sont séparées, par des cloisons 7 et 8, respectivement, d'une première chambre intermédiaire 9 et d'une deuxième chambre intermédiaire 10 elles-mêmes séparées, respectivement, par des cloisons 11 et 12, d'une deuxième zone 13 munie d'un passage d'entrée/sortie de fluide 14, et d'une troisième zone 15 munie d'un passage d'entrée/sortie de fluide 16.

Les cloisons 7, 8, 11, 12, parallèles entre elles, comportent chacune une ouverture traversante, telles que celles identifiées 17, 18 et 19 sur les figures, formées dans l'alignement les unes des autres et dans lesquelles coulisse le tiroir 2 de forme cylindrique et muni localement d'une zone amincie 20, avantageusement à profil évolutif, permettant, selon la position du tiroir, le passage de fluide au travers d'une des ouvertures, telles 17 à 19, et la régulation du débit de fluide passant ainsi d'une zone à une chambre, et inversement, dans le corps de la valve.

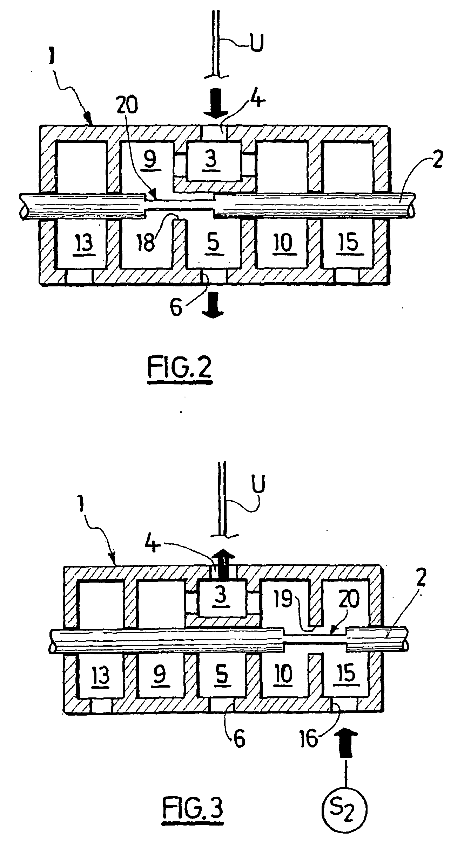

Comme on le voit sur les figures, dans la configuration de la figure 1, le tiroir 2 établit une communication, via l'ouverture 17, entre la deuxième zone 13 et la chambre 9. Les zones 5 et 15 et la chambre 10 sont chacune isolée. Dans la configuration de la figure 2, le tiroir 2 permet une communication, via l'ouverture 18, entre cette chambre intermédiaire 9 et la quatrième zone 5, les zones 13 et 15 et la chambre 10 étant isolées. Dans la configuration de la figure 3, le tiroir 2 établi une communication, via l'ouverture 19, entre l'autre chambre intermédiaire 10 et la troisième zone 15, les zones 13 et 5 et la chambre 9 étant isolées. Dans une configuration (non représentée) intermédiaire entre celle des figures 2 et 3, le tiroir permet, symétriquement par rapport à la figure 2, une communication entre la quatrième zone 5 et la deuxième chambre intermédiaire 10 au travers de l'ouverture formée dans la cloison 8 et traversée par le tiroir 2.

Dans le mode de réalisation représenté, la première zone 3 est en communication permanente avec les chambres intermédiaires 9 et 10 via des ouvertures 21 et 22 formées respectivement dans les cloisons 7 et 8.

Le tiroir 2 est continûment positionnable entre la position extrême de la figure 1 et la position extrême de la figure 3 par un servomoteur 23, électrique ou pneumatique, la position du tiroir étant en permanence détectée par un détecteur de position 24, de type électromagnétique ou optique, fournissant un signal de contrôle de position précis à l'unité de commande du servomoteur, ce qui permet une régulation fine du débit de fluide autorisé à passer dans une des ouvertures telles que 17.

On va maintenant décrire le fonctionnement de la valve dans son application à un système embarqué de fourniture d'oxygène à un pilote d'aéronef.

Dans un tel système, la première zone 3 est reliée, via le passage 4, à un circuit utilisateur U alimentant le masque M du pilote. La deuxième zone 13 est reliée, via le passage 14, à une source principale d'oxygène S₁, par exemple un générateur d'oxygène du type à adsorption ou perméation, et le passage de fluide 16 de la troisième zone 15 est relié à une source de secours d'oxygène gazeux ou liquide S₂. Le passage de fluide 6 de la quatrième zone 5 est relié à un circuit de purge 25 débouchant à l'extérieur du cockpit.

La figure 1 représente la configuration de régulation d'un débit d'oxygène en provenance de la source S₁ vers le masque M pour contrôler automatiquement le débit respiratoire demandé par l'utilisateur par modulation du passage au niveau de l'ouverture 17. Dans cette configuration, la troisième zone 15 et la deuxième chambre 10 sont isolées des autres zones.

La figure 2 représente la position de purge du circuit utilisateur U par déplacement du tiroir 2 depuis la configuration de la figure 1, la deuxième zone 13 étant alors isolée et la chambre intermédiaire 9 établissant la communication entre la première zone 3 et la quatrième zone 5 pour purge du mélange gazeux du circuit utilisateur vers l'extérieur via le passage 6.

La figure 3 représente la configuration symétrique de celle de 1a figure 1, où le circuit utilisateur U est alimenté en oxygène depuis la source de secours S₂ via la troisième zone 15, l'ouverture de régulation 19 dans la cloison 12, la deuxième chambre intermédiaire 10 et la première zone 3. Dans cette configuration la deuxième zone 13 et la cinquième zone 5 sont isolées des autres zones.

Quoique la présente invention ait été décrite en relation avec un mode de réalisation particulier, elle ne s'en trouve pas limitée mais est susceptible de modifications et de variantes qui apparaîtront à l'homme de l'art dans le cadre des revendications ci-après. En particulier, la structure particulière du tiroir 2 et des ouvertures coopérantes telles 17, 18 et 19 peut être adaptée avec des profils évolutifs, et le tiroir coulissant peut être remplacé par un organe de valve rotatif débouchant dans des zones angulairement réparties dans le corps de vanne et séparées par des cloisons radiales.

## Revendications

1. Système embarqué de fourniture de gaz respiratoire à un passager comprenant un circuit utilisateur (U) alimentant un masque (M), **caractérisé en ce que** le circuit utilisateur (U) comprend une valve de distribution et de régulation de fluide, comprenant un corps de valve (1) définissant quatre zones internes (3, 5, 13, 15) connectables chacune à un circuit de fluide extérieur via un passage de fluide respectif (4, 6, 14, 16), et une structure mobile (2) déplaçable dans au moins quatre positions pour établir sélectivement une communication de fluide entre deux de ces zones et isoler chacune des deux autres zones, une première (3) desdites zones étant connectable à un circuit de fluide utilisateur (U) et susceptible d'être sélectivement mise en communication avec chacune des trois autres zones (5, 13, 15) selon le déplacement de la structure mobile (2).

2. Système selon la revendication 1, **caractérisé en ce que** la valve comprend une deuxième (13) et troisième (15) zones connectables respectivement à des première et deuxième sources (S₁ ; S₂) de fluide sous pression pour alimenter séquentiellement le circuit de fluide utilisateur (U).

3. Système selon la revendication 2, **caractérisé en ce que** la valve comprend une quatrième zone (5) connectable à un circuit de purge (25).

4. Système selon l'une des revendications précédentes, **caractérisée en ce que** la structure mobile (2) est reliée à un servomoteur (23) de positionnement.

5. Système selon l'une des revendications précédentes, **caractérisé en ce que** la structure mobile est un tiroir (2) coulissant dans des cloisons (7, 8, 11, 12) délimitant les différentes zones (3, 5, 13, 15).

6. Système selon la revendication 5, **caractérisé en ce que** la valve présente une architecture interne symétrique par rapport à un plan médian orthogonal au tiroir (2).

7. Système selon les revendications 3 et 6, **caractérisé en ce que** les première (3) et quatrième (5) zones sont disposées au niveau du plan médian, de part et d'autre du tiroir (2).

8. Système selon la revendication 7, **caractérisé en ce que** la valve comprend une paire de chambres intermédiaires (9 ; 10) en communication permanente (21 ; 22) avec la première zone (3).

9. Système selon l'une quelconque des revendications 1 à 8, **caractérisé en ce que** les sources de fluide sous pression sont des sources d'oxygène principale (S₁) et de secours (S₂).

## Claims

1. Onboard system for delivering respiratory gas to a passenger, comprising a user circuit (U) supplying a mask (M), **characterized in that** the user circuit (U) comprises a fluid distribution and control valve, comprising a valve body (1) defining four internal zones (3, 5, 13, 15) which are each connectable to an external fluid circuit via a respective fluid passage (4, 6, 14, 16), and a mobile structure (2) which can be moved into at least four positions in order to selectively establish a fluid communication between two of these zones and to isolate each of the two other zones, a first (3) of said zones being connectable to a user fluid circuit (U) and being able to be selectively brought into communication with each of the three other zones (5, 13, 15) depending on the movement of the mobile structure (2).

2. System according to Claim 1, **characterized in that** the valve comprises a second zone (13) and third zone (15) which are connectable, respectively, to first and second sources (S₁; S₂) of pressurized fluid in order to supply the user fluid circuit (U) sequentially.

3. System according to Claim 2, **characterized in that** the valve comprises a fourth zone (5) which is connectable to a vent circuit (25).

4. System according to one of the preceding claims, **characterized in that** the mobile structure (2) is connected to a positioning servomotor (23).

5. System according to one of the preceding claims, **characterized in that** the mobile structure is a slide (2) sliding in partition walls (7, 8, 11, 12) which delimit the different zones (3, 5, 13, 15).

6. System according to Claim 5, **characterized in that** the valve has an internal architecture symmetrical with respect to a center plane perpendicular to the slide (2).

7. System according to Claims 3 and 6, **characterized in that** the first zone (3) and fourth zone (5) are arranged in the center plane, on either side of the slide (2).

8. System according to Claim 7, **characterized in that** the valve comprises a pair of intermediate chambers (9; 10) in permanent communication (21; 22) with the first zone (3).

9. System according to any one of Claims 1 to 8, **characterized in that** the sources of pressurized fluid are a main oxygen source (S₁) and an emergency oxygen source (S₂).

## Patentansprüche

1. Eingebautes System zur Bereitstellung eines Atemgases für einen Passagier, umfassend eine Verwendungsschaltung (U), die eine Maske (M) versorgt, **dadurch gekennzeichnet, dass** die Verwendungsschaltung ein Ventil zur Regelung und Verteilung eines Fluids besitzt, umfassend einen Ventilkörper (1), der vier innere Zonen (3, 5, 13, 15) definiert, die jeweils an eine äußere Fluidschaltung über einen jeweiligen Fluiddurchgang (4, 6, 14, 16) angeschlossen werden können, und eine bewegliche Struktur (2), die in mindestens vier Positionen verschiebbar ist, um selektiv eine Fluidverbindung zwischen zwei dieser Zonen herzustellen und jede der beiden anderen Zonen zu isolieren, wobei eine erste (3) dieser Zonen an eine Verwendungsfluidschaltung (U) angeschlossen und selektiv mit jeder der drei anderen Zonen (5, 13, 15) je nach Verschiebung der beweglichen Struktur (2) verbunden werden kann.

2. System nach Anspruch 1, **dadurch gekennzeichnet, dass** das Ventil eine zweite (13) und eine dritte (15) Zone umfasst, die an erste bzw. zweite Quellen (S₁, S₂) eines Druckfluids angeschlossen werden können, um sequentiell die Fluidverwendungsschaltung zu versorgen.

3. System nach Anspruch 2, **dadurch gekennzeichnet, dass** das Ventil eine vierte Zone (5) umfasst, die an eine Reinigungsschaltung (25) angeschlossen werden kann.

4. System nach einem der vorhergehenden Ansprüche, **dadurch gekennzeichnet, dass** die bewegliche Struktur (2) mit einem Servomotor (23) zur Positionierung verbunden ist.

5. System nach einem der vorhergehenden Ansprüche, **dadurch gekennzeichnet, dass** die bewegliche Struktur ein Schieber (2) ist, der in Trennwänden (7, 8, 11, 12) gleitet, die die verschiedenen Zonen (3, 5, 13, 15) begrenzen.

6. System nach Anspruch 5, **dadurch gekennzeichnet, dass** das Ventil eine innere Architektur aufweist, die zu einer zum Schieber (2) orthogonalen Mittelebene symmetrisch ist.

7. System nach den Ansprüchen 3 und 6, **dadurch gekennzeichnet, dass** die erste (3) und die vierte Zone (5) im Bereich der Mittelebene beiderseits des Schiebers (2) angeordnet sind.

8. System nach Anspruch 7, **dadurch gekennzeichnet, dass** das Ventil ein Paar Zwischenkammern (9; 10) umfasst, die in ständiger Verbindung (21; 22) mit der ersten Zone (3) stehen.

9. System nach einem der Ansprüche 1 bis 8, **dadurch gekennzeichnet, dass** die Druckfluidquellen eine Haupt- (S₁) und eine Hilfssauerstoffquelle (S₂) sind.
